# EUROPEAN PATENT APPLICATION

(11) **EP 0 753 840 A2**
(43) Date of publication of application: **15.01.1997**
(21) Application number: 96111203.4
(22) Date of filing: 11.07.1996
(51) Int. Cl.: G09G 3/00

(54) **Driving circuit for a light-emitting element array**

(30) Priority: 12.07.1995 JP 175907/95
(71) Applicant: KONICA CORPORATION, Tokyo (JP)
(72) Inventor: Ichihara, Yoshiyuki, Hachioji-shi, Tokyo (JP); Yamamoto, Hiroyuki, Hachioji-shi, Tokyo (JP)
(74) Representative: Henkel, Feiler, Hänzel & Partner

(57) **Abstract**

In an apparatus for driving a light emitting element array in which plural light emitting elements are aligned in a line, an analog shift register section having plural cells, shifts an electric charge having an analog amount corresponding to a density level of an image signal, plural converting elements each converts the electric charge into a voltage; and plural driving circuits each drives one of the plural light emitting elements in accordance with the voltage so that each light emitting element emits a light in an amount corresponding to the electric charge.

## Description

### BACKGROUND OF THE INVENTION

The present invention relates to improvement of a driving circuit to modulate the light from a light-emitting element array such as an LED array adopted in a writing apparatus of a printer, into multi-values, and specifically to a driving circuit of a light-power modulation system which can operate at high speed and can easily be incorporated into an integrated circuit.

Conventionally, as methods to modulate the light from a light-emitting element array such as an LED array into multi-values, a time modulation method to control light emitting time per single element, and a light-power modulation method to control light emitting energy per single element, are widely known to those skilled in the art.

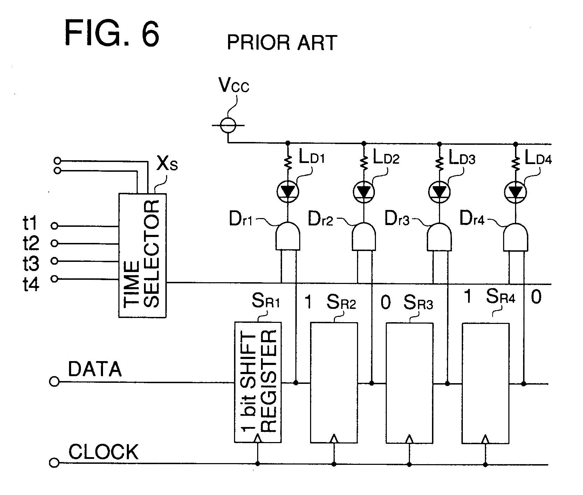

Fig. 6 is a block diagram showing an LED array driving circuit using the time modulation method.

In the time modulation method, a structure as shown in Fig. 6 is generally used, and products having this structure are commercially utilized.

Initially, a case in which LD₁, LD₂, LD₃, LD₄, ..are respectively activated to emit lights at t1, t2, t1+t2, t4, will be considered. Normally, times in which binary numbers are multiplied by a unit time, are selected as t1 to t4, and the time can be minutely adjusted by their combinations.

LEDs to emit light for t1 time, are LD₁ and LD₃, and accordingly, this emission data is serially transferred from a data input terminal to 1-bit shift registers (which is simply called a shift register, hereinafter) SR₁ to SR₄ corresponding to clock pulses, and is set into the shift registers. In this case, data to be set in the shift register SR₁ is the data to drive an LD₁, and is "1". Data to be set in the shift register SR₂ is the data to drive an LD₂, and is "0". Data to be set in the shift register SR₃, is the data to drive an LD₃, and is "1". Data to be set in the shift register SR₄, is the data to drive an LD₄, and is "0". These data are applied to the terminals of drivers Dr₁ to Dr₄, which are also used for AND-gates. After drivers Dr₁ to Dr₄ have been set as described above, when t1 is selected in a time selector section, a signal on the t1 terminal is outputted to other terminals of AND-gates Dr₁ to Dr₄, constituting drivers. Accordingly, when a pulse signal corresponding to time t1 is applied to the t1 terminal of the time selector, only LD₁ and LD₃ emit the light at time t1.

Next, LED data to emit the light at time t2 is serially inputted again into shift registers SR1 to Sr4 according to clock pulses as described above. In this case, the LED to emit the light at time t2 is only the LD_{2,} and data to be set in the shift register SR₁ is "0". Data to be set in the shift register SR₂ is "1". Data to be set in shift registers SR₃ and SR₄, are "0". After such data have been set in shift registers, t2 is selected in the time selector ts. When a clock pulse of time t2 is applied to a terminal t2, the LD₂ emits the light at time t2.

When such operations are repeated, desired-time modulation per element is attained.

The LED array driving circuit realized by the above-described structure is commonly put into practice because their connection to light-emitting elements is relatively easy, and therefore it is easily formed into a digital IC.

However, when resolving power of time by the above-described time modulation method is increased, it is necessary to repeatedly set data for each operation. Therefore, the number of data transfer cycles is increased, resulting in a method which requires longer time in recording time for 1 dot. This means that the method can be applied only to lower speed recording in view of the recording speed, and is only realized in lower speed fields such as photographic paper recording.

On the other hand, in the light-power modulation method, it is commonly known that in principle a driving current is controlled per LED element. However, there is a conventional technological problem in which a driving circuit is required for each element, and applying current information to the circuit and modulating it, interfere with the realization of the control of the driving current per LED element. When there is only a single light-emitting element, it is easy to structure a control circuit for the driving current. However, in light-emitting element arrays in image recording, it is required to simultaneously control 3000 to 5000 light-emitting elements. In such cases, considering that a circuit to control the driving current is provided for each element and controlled from the outside of the circuit, the control circuit to control minute voltage or current for 3000 to 5000 circuits and wiring, are necessary, and there is a major problem in which forming them into an integrated circuit is extremely difficult. Further, when a system is structured such that current modulation information for each element is applied by a switching method using such switches, in order to simplify wiring to the light-emitting elements, circuits can be simplified, however, the following additional technological problems occur: switching noises occur; and switch control timing is complicated, making this method inappropriate for high speed processing.

### SUMMARY OF THE INVENTION

In view of the foregoing problems, the object of the present invention is to prevent lowered recording speed accompanied with an increase of the multi-valued number of a driving circuit of a light-emitting element array, and to provide a driving circuit of the light-emitting element array appropriate for high speed multi-value modulation of the light-emitting element array.
(1) A driving circuit for a light-emitting element array comprising: an electrical charge generation section for generating electrical charges corresponding to amplitude of image signals inputted based on clock signals; CCD analog shift registers for receiving the electrical charges generated in the electrical charge generation section and for transferring electrical charges based on clock pulses; charge-voltage conversion sections which is provided for each cell of the CCD analog shift registers, and by which electrical charges are accumulated and converted into voltage; a shift gate section for collectively shift-transferring electrical charges in each cell of the CCD analog shift registers to the electrical charge-voltage conversion section according to a trigger signal; reset gate sections which is provided in each electrical charge-voltage conversion section, and by which electrical charges accumulated as described above are collectively deleted according to a clearing signal; and driver sections which is provided in each electric charge-voltage conversion section, and which drives the light-emitting element corresponding to voltage, the driving circuit for the light-emitting element array is characterized in that one element of the light-emitting elements array is connected to a corresponding driver section, and light modulation of a plurality of light-emitting elements is simultaneously conducted corresponding to the amplitude of the image signal.

When the system is structured as described above, that is, when light-power modulation information is transferred in an analog manner as electrical charge information by CCD analog shift registers, and drivers to activate the LED to emit the light according to transferred electrical charge information, are provided, and then, the light-power modulation circuit for each element, which can be easily integrated into a chip, can be realized.

### BRIEF DESCRIPTION OF THE DRAWINGS

Fig. 1 is a block diagram showing an example in a driving circuit for a light-emitting element array of the present invention.

Fig. 2 is a detailed circuit diagram of an analog data holding section per unit cell.

Fig. 3 is a circuit diagram of a light emitting control section per unit cell.

Figs. 4(a) to 4(e) are time charts showing an operation of a D/A converter.

Figs. 5(a) to 5(d) are time charts showing operations conducted within a range from an analog data serial transfer section to a light emitting control circuit section.

Fig. 6 is a block diagram showing a driving circuit for an LED array using a time modulation method.

### DETAILED DESCRIPTION OF THE PREFERRED EMBODIMENT

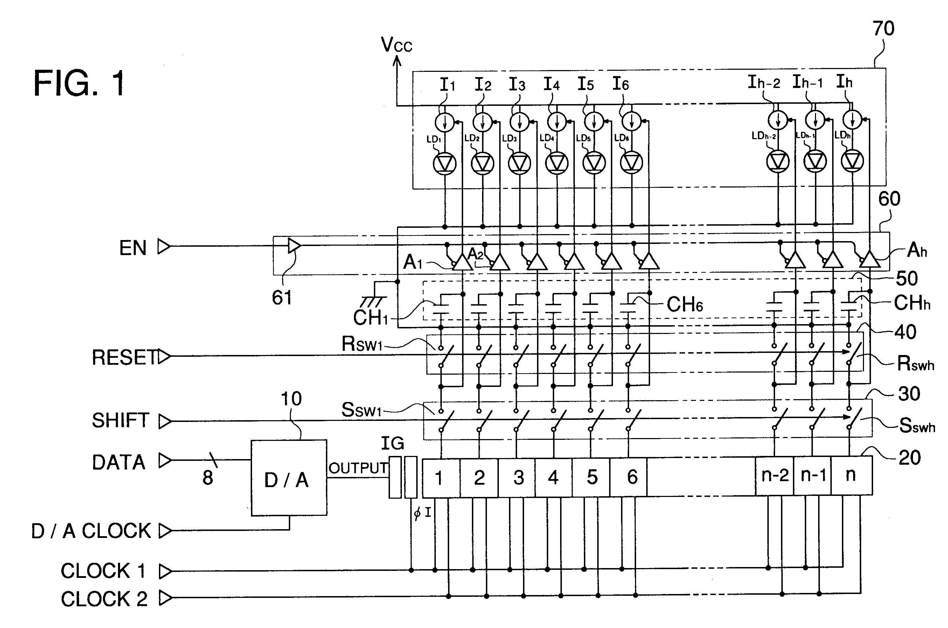

Fig. 1 is a block diagram showing an example of a driving circuit for a light-emitting element array of the present invention.

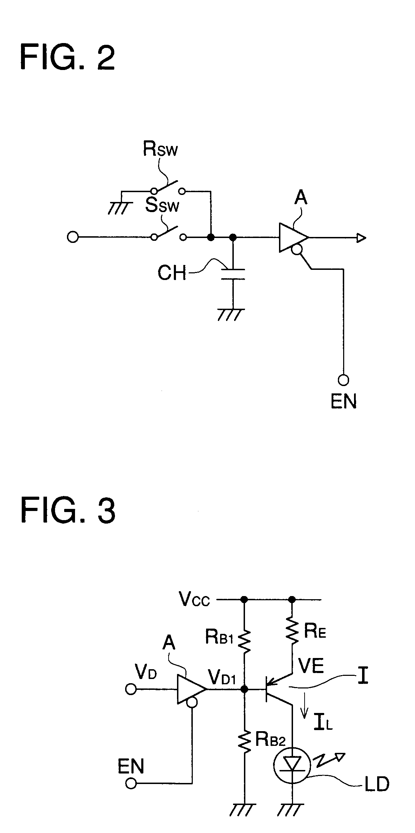

Fig. 2 is a detailed circuit diagram of an analog data holding section per cell. Fig. 3 is a circuit diagram of a light-emitting control section per cell.

In a driving circuit for the light-emitting element array, an LED array, which is a current drive type light-emitting element, is driven by a light-power modulation method. The driving circuit for the light-emitting element array consists of: a D/A converter 10; a CCD analog shift register 20, equivalent to an analog data serial transfer section, which serially transfers analog data sent from a D/A converter 10; a shift switch group 30 and a reset switch group 40 which are equivalent to an analog data parallel transfer section which parallelly transfers analog data from the CCD analog shift register 20; a storage capacitor group 50 and a buffer group 60 constituting an analog data holding section which holds electrical charges transferred from an analog data transfer section; a light-emitting element group LD₁ to LDₕ constituting a light emit section 70 which emits light due to electrical charges from the analog data holding section; and a current source group I₁ to Iₕ which drives the light-emitting element group LD₁ to LDₕ. The structure of each unit will be described below.

Clock pulses φ₁, φ₂, and a D/A clock are generated by a timing generator (not shown in the drawing) from a reference clock inputted from a single system so that an exact timing control is carried out, considering delay or the like.

The D/A converter 10 is equivalent to an electrical charge generation section including the CCD analog shift register 20. Serial image data to modulate the light-emitting element group LD₁ to LDₕ are inputted into a data input terminal, and are converted into analog voltage according to the D/A clock, then it is serially sent to the CCD analog shift register 20. When considering that the light-emitting element group is modulated by superimposing a digital value in order to compensate for fluctuations of LED elements, it is preferable to set the resolving power higher compared to the number of gradations of the actual modulation, and therefore the number of bits of the D/A converter 10 is about 6 to 12.

The CCD analog shift register 20 is an analog charge transfer circuit, which is used as CCD image sensors, and is a device provided with registers having the number of steps equal to the number of elements in light-emitting element groups LD₁ to LDₕ and serially transfers analog electrical charge signals according to the clock pulse φ₁.

A shift register group 30 is provided with shift switches S_{SW1} to S_{SWh} equal to the number of elements in light-emitting elements group LD₁ to LDₕ. The shift switch group 30 shift-transfers charges of each cell of the CCD analog shift register 20 to a storage capacitor group 50 according to shift trigger signals.

Referring to Fig. 2, a detailed circuit of the main portion per single cell of the analog data holding section will be described below.

As shown in Fig. 3, the analog data holding section consists of a reset switch R_{SW}, a shift switch S_{SW}, a storage capacitor CH and a high input impedance buffer A. Image data is impressed on an input terminal of the shift switch S_{SW} from the CCD analog shift register 20. When the reset switch R_{SW} discharges accumulated charges in the storage capacitor CH to the ground and eliminates the charges, by a reset trigger signal, so that the former line image data is not mixed into the later line image data, then, the light emitting timing and light emitting time per line are controlled by an enable-signal EN which is supplied to an enable-terminal of the high input impedance buffer A.

A storage capacitor group 50 corresponds to a charge-voltage conversion section, and in which small capacity capacitors CH₁ to CHₕ , equal in number to that of the light-emitting element group LD₁ to LDₕ, are arranged as shown in Fig. 1. Due to such capacitors, electrical charges are accumulated in the capacitors for a relatively short period of time, and a voltage proportional to the electrical charge is generated.

A buffer group 60 consists of an inverter 61 and high input impedance buffers A₁ to Aₕ, and controls the flow of the current which is generated in the storage capacitor group 50, by the enable-signal EN. An input to the inverter 61 is sent from the enable terminal, and when the enable signal EN is controlled, the circuit is structured to control whether the light-emitting element array LD1 to LDn is activated or not. That is, control of the EN terminal corresponds to the output impedance of the high input impedance buffer A. Due to the above, the voltage inputted into a constant current source circuit is determined by the ratio of base resistance R_{B1} to R_{B2} of a transistor. In this case, when RB₁ « RB₂, current seldom flows to the transistor collector, and the light-emitting element arrays LD₁ to LDₕ are not activated. Due to the above structure, the light emitting time of a single line can be collectively controlled corresponding to the sensitivity of the photoreceptor. Accordingly, after electrical charges have simultaneously been shifted, the light-emitting element can be controlled so as to activate a single line for a required period of time, using the enable signal.

Referring to a detailed circuit diagram shown in Fig. 3, a light emitting control circuit for a single cell will be described below.

The light transmitting control circuit consists of the high input impedance buffer A, constant current source circuit I composed of the transistor, base resistance R_{B1}, R_{B2} and emitter resistance R_{E}, and an LD connected to the transistor's collector terminal. A driving current for the LD is obtained when the output voltage V_{D1} from the high input impedance buffer A is subtracted by 0.7 (V) which is V_{BC} of the transistor, and then the result is divided by the emitter resistance. Accordingly, the driving current for the LD is proportional to the output voltage V_{D1} from the buffer A, and is reversely proportional to the value of the emitter resistance R_{E}.

A constant current source group I₁ to Iₕ corresponds to the light-emitting element driver, and the voltage, generated from the storage capacitor group 50, which is inputted through the buffer group 60, is utilized to control a current proportional to the voltage. The input impedance of the current sources I₁ to Iₕ is ideally a high impedance so as to prevent electrical charges of the storage capacitors CH₁ to CHₕ from leaking, and further it is preferable to constitute the system with FETs, which is the reason why the high input impedance is required for the buffer A.

As described above, the light-emitting element group LD₁ to LDₕ is composed of LDEs which are current driving type light-emitting elements.

In this connection, in this example, constant current source groups I₁ to Iₕ are adopted in this system because the light-emitting element array is composed of LEDs which are current control type elements. However, the present invention is not limited to this example, and it is required to replace the light-emitting element array with a voltage and current control circuit when a device such as a fluorescent character display tube array is used, or to replace the light-emitting element array with the voltage control circuit when a device such as an EL is used.

When such a structure is adopted, this driving circuit can be structured with ICs, and a small sized, high speed, and high resolving-powered light-power modulation circuit can be provided. When the system is structured utilizing ICs, all components including light-emitting elements may be formed into ICs, however, heat tends to be generated in the light-emitting element section, thereby, in order to reduce the adverse effects of the heat generation, components used in the back stage of the driver section may be structured by an LED array chip, and other components may be structured of driving circuit chips. Further, it is not necessary to structure all components used in a single line with an IC, and they may be, of course, also structured of a small circuit composition such as 128 elements, or 64 elements. In such cases, the final stage of the CCD analog shift register 20 may be structured so as to be serially connected to the next chip, or when high speed operations are required, an electrical charge generation mechanism section may be provided per a single chip.

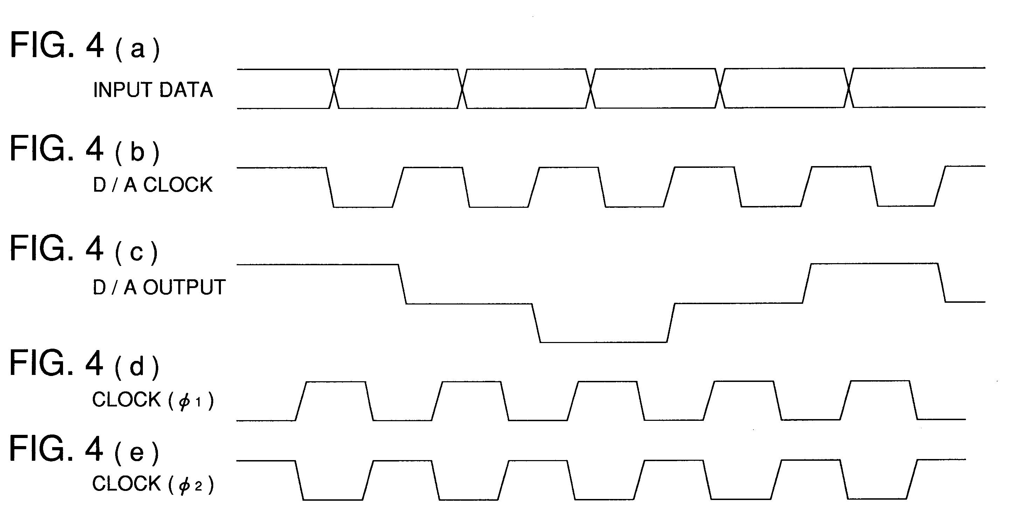

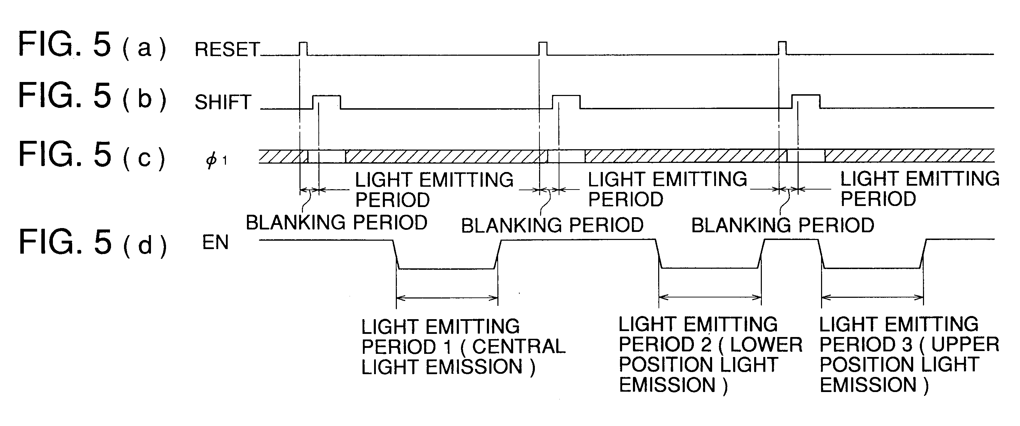

Referring to the time charts shown in Figs. 4 and 5, operations of the driving circuit of the light-emitting element array in this example will be described below

Fig. 4 is a time chart showing an operation of the D/A converter 10.

Fig. 4(a) shows image data inputted into the D/A converter 10. Fig. 4(b) are clock pulses showing conversion timing of the D/A converter 10. Fig. 4(c) shows analog voltage outputted from the D/A converter 10. Fig. 4(d) shows timing signals φ₁ which are clock pulses to switch an analog switch IG for transferring converted electrical charge signals to a CCD analog shift register 20, and are also clock pulses to transfer electrical charges in the CCD analog register 20. Fig. 4(e) shows clocks φ₂ which are clock pulses to provide timing to transfer electrical charges in the CCD analog shift register 20.

The serial image data to modulate the light-emitting element array is converted into an analog voltage by the D/A converter 10 at the timing described above. Then, the analog charge signals for a single line is transferred into the CCD analog shift register 20. When such a transfer operation stops, the clock φ₁ also temporarily stops, and then, the analog charge signals are parallelly transferred into the light emission control circuit by the shift trigger signal.

Fig. 5 is a time chart showing operations conducted from an analog data serial transfer section to the light emission control circuit section.

Fig. 5(a) shows a reset signal to simultaneously eliminate all electrical charges held in each storage capacitor CH₁ to CHₕ when a reset switch group 40 is activated after lighting of a single line has ended.

Fig. 5(b) shows shift trigger signals showing the timing to shift the analog data to the storage capacitor group 50 when a shift switch group 30 is turned ON.

Fig. 5(c) shows a period of time to allow light emission of the light-emitting element group LD₁ to LDₕ into which analog electrical charge signals are parallelly transferred by the clock φ₁, and a blanking period to not allow light emission of the light-emitting element group LD₁ to LDₕ. When the shift trigger signal (refer to Fig. 5(b)) to perfectly shift-transfer light emitting data in adjoining pixels to storage capacitors CH₁ to CHₕ as parallel signals, is activated, the transfer clock pulses φ₁ and φ₂ (not shown in the drawing) are perfectly stopped.

Fig. 5(d) shows an enable signal EN which is supplied to the buffer group 60, in which a high-level signal means a period to inhibit light emission, and a low-level signal represents a period to allow light emission.

As seen in the time chart shown in Fig. 5, the timing clocks φ₁ and φ₂ temporarily stop when the analog charge signals for a single line have been transferred. Electrical charges transferred at that time, stop while the electrical charges are being accumulated in each cell of the CCD analog shift register 20. In this status, when the shift trigger signal is supplied to the shift switch group 30 as shown in Fig. 5(b), the electrical charges in each cell are simultaneously shift-transferred to the storage capacitor group 50 through the shift switch group 30.

When the shift transfer is carried out, electrical charges accumulated in each cell of the CCD analog shift register 20 are eliminated, and the CCD analog shift register 20 is in a status in which data transfer for the next line can be started. When such functions of the CCD analog shift register are utilized, 3000 to 5000 image data can be transferred during light emitting operations for the former line, resulting in realization of high speed transfer operations.

After lighting of 1 line has been completed, when a reset trigger signal is supplied so that the reset switch group S_{SW1} to S_{SWh} provided in storage capacitors CH₁ to CHₕ are activated, then, electrical charges accumulated in storage capacitors CH₁ to CHₕ, are discharged to the ground and simultaneously eliminated. This is an important operation by which light emission signals of the following line are not mixed with those of the previous line. In this connection, the driving circuit for the light-emitting element array in this example can also be used as a light-power modulation circuit for the light-emitting element array other than for LEDs. When the driving circuit is structured two-dimensionally, it can also be applied to the brilliance modulation circuit of a display panel device using the light-emitting element array.

When the above-described structure is adopted, the present invention can provide a driving circuit for light-emitting element arrays by which the recording speed of the driving circuit of the light-emitting element array is not lowered, and by which the driving circuit adopting the light-power modulation method can easily be structured.

## Claims

1. An apparatus for driving a light emitting element array in which plural light emitting elements are aligned in a line, comprising;
charge generating section for receiving image signals sequentially inputted in synchronization with clock pulses, wherein each image signal represents a density level of a pixel and for generating an electric charge in an amount corresponding to the density level of each image signal;
analog shift register section having plural cells, for receiving the electric charges;
plural converting members each for converting the electric charge into a voltage; and
plural driving members each for receiving the voltage from one of the plural converting members and for driving one of the plural light emitting elements in accordance with the voltage so that each light emitting element emits a light in an amount corresponding to the electric charge.

2. The apparatus of claim 1, wherein the charge generating section is a D/A converter to convert a digital data of the image signal into an analog amount of the electric charge.

3. The apparatus of claim 1, wherein the analog shift register sequentially shifts the electric charges through the plural cells in synchronization with the clock pulses so that a line of the electric charges are formed in the plural cells.

4. The apparatus of claim 1, further comprising plural gate members each for passing the electric charge from one of the plural cells to one of the plural converting members in response to a trigger signal.

5. The apparatus of claim 4, wherein the plural gate members pass the electric charges simultaneously in response to a trigger signal so that the plural light emitting elements emit lights simultaneously.

6. The apparatus of claim 1, wherein the converting member is a condenser to store the electric charge.

7. The apparatus of claim 1, wherein the driving member comprises an electric current source including a transistor whose collector terminal is grounded.

8. The apparatus of claim 1, further comprising plural reset gate members each for discharging the electric charge in one of the plural converting members.
